# EUROPEAN PATENT APPLICATION

(11) **EP 0 933 384 A1**
(43) Date of publication of application: **04.08.1999**
(21) Application number: 99100725.3
(22) Date of filing: 15.01.1999
(51) Int. Cl.: C08F 283/10, C09D 151/08

(54) **Process for preparing epoxy-acrylic hybrid emulsions**

(30) Priority: 28.01.1998 US 14554
(71) Applicant: National Starch and Chemical Investment Holding Corporation, Wilmington, Delaware 19803-7663 (US)
(72) Inventor: Liu, Yingchun, Brampton, Ontario L6V 4M2 (CA); Farwaha, Rajeev, Brampton, Ontario L6T 1M1 (CA); Shih, Frank Y., Arcadia, California 91007 (US)
(74) Representative: Held, Stephan, Dr.rer.nat., Dipl.-Chem.

(57) **Abstract**

The present invention relates to a process for preparing epoxy-acrylic hybrid emulsions having an polyepoxide content of up to 95% based on the total weight of resin solids in the emulsion. The process involves (I) dissolving a polyepoxide with at least one acrylate monomer in the presence of water and a surfactant to form a mixture; (II) microfluidizing or homogenizing the mixture in a microfluidizer or homogenizer having a chamber pressure of from about 6,000 psi to about 15,000 psi to form a pre-emulsion; and (III) polymerizing the pre-emulsion in the presence of a free radical polymerization catalyst. The epoxy-acrylic hybrid emulsion can be formulated into solvent-free wood coatings, direct-to-metal coatings and paint.

## Description

The present invention relates to a process for preparing epoxy-acrylic hybrid emulsions having a polyepoxide content of up to 95% based on the total weight of resin solids. More specifically, the process involves microfluidizing or homogenizing a pre-emulsion containing a polyepoxide and at least one acrylate monomer in a microfluidizer or homogenizer having a chamber pressure of from about 6,000 Psi to about 15,000 psi prior to polymerization.

Environmental and toxicological concerns have been responsible for the significant research on waterborne epoxy technology and acrylic emulsion technology. Waterborne epoxy systems have become increasingly popular for ambient cure coating applications because of their reduced volatile organic contents (V.O.C) as compared to acrylic emulsion coating compositions. Furthermore, the advances made in waterborne epoxy technology have afforded significant V.O.C reduction along with providing corrosion and humidity resistance for coatings that protect many different types of substrates, such as metallic substrate. Epoxy coatings also exhibit excellent chemical resistance and good heat stability. The disadvantages of epoxy coatings, however, are that once cured they are normally hard and brittle and they lack the flexibility for applications for medium hard substrates, such as wood. Another major problem or epoxy coatings is that their UV resistance is questionable.

Coatings prepared from acrylic emulsion polymers are widely used because of their UV resistance and flexibility. The disadvantages of acrylic coatings, however, is that they do not exhibit as good solvent and corrosion resistance as epoxy resins. Another disadvantage of acrylic emulsions of relatively high Tg is that they normally require large amount of coalescing solvent for their film formation.

Blends of an epoxy resin and acrylic emulsion have been attempted by physical blending technology. Although this technique is straightforward, physical blends of epoxy and acrylic resins often encounter poor compatibility problems and generally exhibits poor film clarity. In addition, the epoxy resin in the physical blend normally does not coalesce the acrylic resin efficiently.

U.S. Patent No. 4,028,294 describes epoxy-acrylic hybrid latexes wherein the acrylic monomer is polymerized in the presence of a polyepoxide. The resulting epoxy-acrylic hybrid latexes exhibit enhanced compatibility as compared to physically blended epoxy and acrylic resins which results in good film clarity and very low minimum film forming temperature (MFFT). In addition, the epoxy-acrylic hybrid latexes may be free of V.O.C's.

The disadvantage of the prior art epoxy-acrylic hybrid latexes technology is that the upper limit of the epoxide in the epoxy-acrylic hybrid latexes is only disclosed to be as high as 50% based on the weight of total resin solids. In many applications, such as direct-to-metal coatings and pigmented paint systems, a higher ratio of epoxy to acrylic is often desired in order to enhance the water resistance, corrosion resistance, and hardness properties.

Accordingly, it is a object of the invention to provide a process for preparing epoxy-acrylic emulsions.

It is another object of the invention to provide a process for preparing an epoxy-acrylic emulsion having a high level of epoxide.

It is also an object of the invention to provide a process for preparing a solvent free epoxy-acrylic emulsion which is useful as a coating which exhibits improved water resistance, corrosion resistance, and hardness.

With regard to the foregoing and other objects, the present invention provides a process for preparing an epoxy-acrylic hybrid emulsion, said process comprising (I) dissolving a polyepoxide with at least one acrylate monomer in the presence of water and from about 0.1 to 5 weight percent based on the total weight of monomers of at least one surfactant to form a mixture wherein the polyepoxide has a molecular weight of from about 300 to about 10,000 and the acrylate monomer has the formula 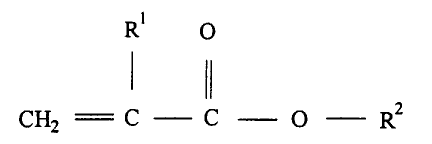 wherein R¹ is hydrogen or methyl and R² is selected from the group consisting of hydrogen, an alkyl group having from 1 to 10 carbon atoms, and a hydroxy alkyl group having from 1 to 4 carbon atoms; (II) microfluidizing or homogenizing the mixture in a microfluidizer or homogenizer having a chamber pressure of from about 6,000 psi to about 15,000 psi to form a pre-emulsion; and (III) polymerizing the pre-emulsion in the presence of a free radical polymerization initiator and at a temperature of from about 30°C to about 100°C to form a stable epoxy-acrylic hybrid emulsion, wherein the polyepoxide is present in an amount of from about 20 to about 95 weight percent based on the total resin solids in the emulsion.

According to another aspect the invention provides a coating composition which is prepared using the epoxy-acrylic hybrid emulsion. The present inventors have determined that the polyepoxide which is incorporated into the acrylic matrix acts as a coalescent during film-formation and lowers the minimum-film-forming-temperature (MFFT) of the coating to about 0°C in the absence of other coalescing agents.

The epoxy-acrylic hybrid emulsion prepared by the process of the present invention provides a durable, clear film having superior gloss and better chemical resistance properties as compared to physical blends of epoxy and acrylic resins.

In a preferred embodiment, the epoxy-acrylic hybrid emulsion is formulated into solvent-free wood coatings, direct-to-metal coatings and paint.

The invention provides a process for preparing epoxy-acrylic hybrid emulsions which are stable at room temperature for long periods of time and which exhibit substantially no phase separation and substantially no change in particle size distribution during storage. In general, the epoxy-acrylic hybrid emulsions are prepared by a process which involves (I) dissolving a polyepoxide with at least one acrylate monomer in the presence of water and from about 0.1 to 5 weight percent based on the total weight of monomers of at least one surfactant to form a mixture.

Any epoxy resin having more than two epoxy or oxirane rings may be employed as the polyepoxide, for example, water-insoluble aromatic polyepoxides and water-dispersible polyepoxide resins may be used. The molecular weight of the polyepoxide is from about 300 to about 10,000, preferably from about 350 to about 4,000. Preferably, the polyepoxide is a water-insoluble aromatic polyepoxide such as a polyglycidyl ether. Especially preferred are polyglycidyl ethers having a 1,2-epoxy equivalency of from about 1.4 to about 2, most preferably from about 1.8 to about 2.0. Water-dispersible polyepoxide resins containing pendant hydroxyl groups are known and can be formed by the reaction of bridged phenols with epichlorohydrin. Typically, the bridging group is propylidine or methylene group. Examples of polyepoxides include dispersion of glycidyl ether of polyhydric phenols such as bisphenol A and bisphenol F. Low molecular weight is preferred for the epoxy to function as an internal coalescent in the epoxy-acrylic hybrid emulsion and can be easily incorporated into acrylic matrix by dissolving. Most preferably, the polyepoxide is a diglycidyl ether of bisphenol A having an average molecular weight of about 390 which is commercially available as EPON 828 from Shell Chemical Corp.

The acrylate monomer has the formula: 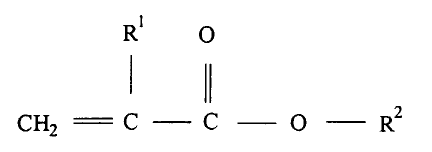 In the above formula R¹ is hydrogen or methyl and R² is an alkyl group having from 1 to 10 carbon atoms or a hydroxy alkyl group having from 1 to 4 carbon atoms. Examples of acrylate monomers are methyl methacrylate, ethyl acrylate, propyl acrylate, butyl acrylate, butyl methacrylate, pentyl acrylate, hexyl acrylate, 2-ethyl hexyl acrylate, and hydroxypropyl acrylate. Combinations of acrylate monomers can also be used. Preferred acrylate monomers are butyl acrylate, methyl methacrylate and hydroxypropyl acrylate. The alkyl groups in the acrylate monomers can be straight chained or branched. Thus, for example, n-propyl acrylate, isopropyl acrylate, n-butyl acrylate or t-butyl acrylate can be used.

Optionally, a carboxylic monomer is included in the epoxy-acrylic hybrid emulsion as a comonomer with the acrylate monomer(s). The carboxylic monomer contains at least one carboxyl group attached directly to the olefinic carbon. Such monomers preferably are selected from alpha, betaethylenically unsaturated C₃-C₈ monocarboxylic acids, alpha, betaethylenically unsaturated C₄-C₈ dicarboxylic acids and the anhydrides thereof, and the C₄-C₈ alkyl half esters of the alpha, beta-ethylenically unsaturated C₄-C₈ dicarboxylic acids. A combination of carboxylic monomers may also be used. Most preferably the carboxylic monomer is selected from acrylic acid, methacrylic acid, the C₄-C₈ alkyl half esters of maleic acid, maleic anhydride, fumaric acid, and itaconic acid.

When the carboxylic monomer is present in the emulsion, the carboxylic monomer is present in an amount of less than 1 weight percent based on the total weight of monomers in the emulsion. The presence of the carboxylic monomer in an amount of less than 1 weight percent has been shown to provide mechanical stability to the epoxy-acrylic hybrid emulsion and formulated paint products prepared therefrom. The inventors have determined that greater than 1 weight percent of the carboxylic monomer in the emulsion may result in coagulation when the pH of the emulsion is adjusted with solutions of ammonia or sodium hydroxide.

The surfactant system employed in preparing the epoxy-acrylic hybrid emulsion can be anionic and/or nonionic surface active agents. Suitable nonionic surfactants include polyoxyethylene condensates which include polyoxyethylene aliphatic ethers, such as polyoxyethylene lauryl ether and polyoxyethylene oleyl ether, and polyoxyethylene alkaryl ethers, such as polyoxyethylene nonylphenol ether and polyoxyethylene octylphenol ether. Suitable anionic surfactants include alkyl aryl sulfonates and alkali metal alkyl sulfates. Specific examples of such anionic surfactants include sodium nonylphenol ethoxylate sulfate and ammonium nonylphenol ethoxylate sulfate. The preferred surfactant systems contains a combination of nonionic and anionic surfactants.

The surfactant is employed in an amount effective to achieve adequate emulsification of the polyepoxide, acrylate monomers and optional carboxylic monomers in the aqueous phase. Preferably, the surfactant is present in the emulsion in an amount of from about 0.1 to 5 weight percent based on the total weight of monomers. More preferably, the surfactant is present in an amount of from about 1 to about 3 weight percent based on the total weight of monomers. Most preferably, the surfactant system contains from about 0.75 to 1.5 weight percent of a nonionic surfactant and from about 0.75 to 1.5 weight percent of a anionic surfactant.

The proportion of polyepoxide can vary considerably, but preferably the amount of polyepoxide in the emulsion will be from about 20 to about 95 weight percent based on the total weight of resin solids. More preferably, the amount of polyepoxide will be from about 51 to about 90 weight percent based on the total weight of resin solids in the emulsion. The proportion of the polyepoxide used in a specific embodiment may depend on the molecular weight of the polyepoxide.

In step (II), the mixture formed in Step (I) is microfluidized or homogenized in a microfluidizer or homogenizer having a chamber pressure of from about 6,000 psi to about 15,000 psi to form a pre-emulsion. As used herein, "microfluidized" and "homogenized" refer to a mechanical process for reducing the size of the droplets of the polyepoxide and acrylic monomer in the pre-emulsion. The polyepoxide and acrylate monomer form droplets in the water. The average diameter of the droplets is from about 1 to about 10 microns prior to microfluidization or homogenation. The average diameter of the polyepoxide and acrylic monomer droplets is reduced to less than about 1 micron during microfluidization or homogenation. Preferably, the average diameter of the droplets is reduced to about 0.01 to about 0.5 microns during microfluidization or homogenation. During the microfluidization or homogenation, the mixture containing the polyepoxide, acrylate monomer and water is preferably passed through small channels under a pressure of from about 8,000 psi to about 12,000 psi at a speed of approximately 700 ft/sec. The interaction intensity, which involves shear, impingement, distention, and cavitation forces, on the mixture with the microfluidizer or homogenizer controls the size and distribution of the droplets in the mixture and ultimately the size of the polymer particles.

The application of the microfluidized or homogenized process provides the formation of smaller droplets which results in a more intimate mixture of the polyepoxide and acrylate and/or carboxylic monomers which allows larger amounts of polyepoxide to be incorporated into the final epoxy-acrylic hybrid emulsion. In addition, the larger amounts of polyepoxide in the emulsion provide harder polymers and the polymers exhibit increased corrosion resistance which are desirable performance properties for many applications.

A preferred microfluidizer is available from Microfluidics Corporation or Menton Gaulin. In the Microfluidics microfluidizer, a mixture is pumped into a specially designed chamber in which fluid sheets interact at ultrahigh velocities and pressures up to 1500 ft/second and 16,000 psi, respectively. The fixed microchannels within the chamber provide an extremely focused interaction zone of intense turbulence causing the release of energy amid cavitation and shear forces. Most preferably, the Microfluidics microfluidizer is set at 20-50 psi. (8,000 to 12,000 psi actual chamber pressure).

In Step (III), the pre-emulsion formed in Step (II) is polymerized using free radical emulsion polymerization techniques utilizing either batch process, continuous monomer addition or incremental monomer addition. As used herein, the term "batch" refers to a process whereby the entire amount of monomers is added in a single charge. As used herein the terms "continuous monomer addition" and "incremental monomer addition" refers to a process wherein optionally a minor portion of the monomers are initially charged in the reactor and the remainder of the monomers then added gradually over the course of the reaction. The entire amount of the aqueous medium with polymerization additives can be present in the polymerization vessels before introduction of the monomers, or alternatively a portion of it can be added continuously or incrementally during the course of the polymerization.

Essentially any type of free radical generator can be used to initiate the free radical emulsion polymerization. For example, free radical generating chemical compounds, ultraviolet light or radiation can be used. The choice of free radical generating chemical compound depends on the desired polymerization rate and final polymer properties. The polymerization in aqueous emulsion is itself conventional except for the presence of the polyepoxide.

Some representative examples of free radical initiators which are commonly used include the various persulfates, percarbonates, perborates, and peroxides. Suitable initiators include potassium persulfate, ammonium persulfate, sodium persulfate, benzoyl peroxide, hydrogen peroxide, caproyl peroxide, t-butyl peroxide, di-t-butyl peroxide, dicumyl peroxide, 2,4-dichlorobenzoyl perooxide, decanoyl peroxide, lauryl peroxide, cumene hydroperoxide, p-menthane hydroperoxide, t-butyl hydroperoxide, acetyl acetone peroxide, dicetyl peroxydicarbonate, t-butyl peroxyacetate, t-butyl peroxymaleic acid, t-butyl peroxybenzoate, acetyl cyclohexyl sulfonyl peroxide, and the like; the various azo compounds such as 2-t-butylazo-2-cyanopropane, dimethyl azodiisobutyrate, azodiisobutyronitrile, 2-t-butylazo-1-cyanocyclohexane, 1-t-amylazo-1-cyanocyclohexane, and the like; the various alkyl perketals, such as 2,2-bis-(t-butylperoxy)butane, ethyl 3,3-bis(t-butylperoxy)butyrate, 1,1-di-(t-butylperoxy) cycloyhexane, and the like. Persulfate initiators, such as potassium persulfate and ammonium persulfate are especially useful in such aqueous emulsion polymerizations.

The amount of initiator employed will vary with the desired molecular weight of the polymer being synthesized. Higher molecular weights are achieved by utilizing smaller quantities of the initiator and lower molecular weights are attained by employing larger quantities of the initiator. However, as a general rule from 0.005 to 1 phm (parts by weight per 100 parts by weight of monomer) of the initiator will be included in the reaction mixture. In the case of metal persulfate initiators most commonly from 0.1 to 0.5 phm will be employed in the polymerization medium.

The free radical emulsion polymerization will typically be conducted at a temperature which is within the range of about 30°C to about 100°C. It is generally preferred for the polymerization to be carried out at a temperature which is with the range of 50°C to about 90°C. It is typically more preferred to utilize a polymerization temperature which is within the range of about 60°C to about 75°C. To increase conversion levels, it can be advantageous to increase the temperature as the polymerization proceeds. For instance, the polymerization temperature could be maintained at about 50°C at the beginning of the polymerization and increased to a final temperature of about 75°C at the end of the polymerization. Polymerization is continued by maintaining the emulsified mixture at the selected temperature until conversion of the monomer(s) to polymer has been reached.

The polymerization is carried out at a pH of from about 2 to about 7, preferably at a pH of from about 3 to about 5. In order to maintain the pH range, it may be useful to work in the presence of customary buffer systems, for example, in the presence of alkali metal carbonates, alkali metal acetates, and alkali metal phosphates. Polymerization regulators, like mercaptans, aldehydes, chloroform, methylene chloride and trichloroethylene, can also be added. Other ingredients known in the art to be useful for various purposes in emulsion polymerization, such as acids, salts, chain transfer agents, and chelating agents, can be employed.

Although the solids content and viscosity of the epoxy-acrylic hybrid emulsion can vary typical total solids content which is defined as the nonvolatile components of the emulsion is in the range of from about 20 to about 65 weight percent, preferably 40 to 60 weight percent, based on the total weight of the emulsion.

The emulsion polymerization reaction is generally continued until the residual monomer content is below about 1%. The completed reaction product is then allowed to cool to about room temperature.

The polyepoxide in the epoxy-acrylic hybrid polymer of this invention can be cured or crosslinked at room temperature or at elevated temperatures with a variety of crosslinking agents. Preferred crosslinking agents are aqueous solutions of polyfunctional amines containing primary and / or secondary active hydrogens. Especially preferred crosslinking agents are isophoronediamine or 5-amino-1,3,3-trimethylcyclo-hexanemethylamine and 2-amino-2-methyl-1-propanol which are available from Aldrich Chemical Company. Preferably, the amount of crosslinking agent added to the epoxy-acrylic hybrid emulsion is from about 1 to about 20 weight percent, more preferably from about 5 to about 10 weight percent, based on the total resin solids. Curing of the epoxy-acrylic hybrid emulsion containing a crosslinking agent occurs at ambient temperature up to about 130°C, preferably at ambient temperature up to about 50°C.

The inventors have determined that the epoxy-acrylic hybrid emulsions prepared by the process of the invention are sensitive to pure amine crosslinking agents. For example, gel may be formed in the emulsions if the crosslinking agent is added in the form of a pure amine. Therefore, it is recommended that the amine crosslinking agents be applied in the form of an aqueous solution. It is further recommended that the pH of the epoxy-acrylic hybrid emulsions be about 8 when the crosslinking agent is added in order to prevent the amine crosslinking agent from being protonated and thus the lone pair electrons on the nitrogen atoms(s) will not be available for the crosslinking reaction.

The epoxy-acrylic hybrid emulsion containing a crosslinking agent generally has a relatively short shelf life of up to about 10 hours. Therefore, it is recommended that the crosslinking agent be combined with the epoxy-acrylic hybrid emulsion relatively soon to application of the emulsion as a coating.

The epoxy-acrylic hybrid emulsion may be formulated into solvent-free wood coatings, direct-to-metal coatings, and paint to provide a durable, clear film having superior gloss and excellent chemical resistance properties. In one embodiment, 2-amino-2-methyl-1-propanol which is available as AMP 95 from Angos Chemical Company, is added to the epoxy-acrylic hybrid emulsion and then the emulsion is added to a paint formulation in order to give the resulting film more chemical resistance and hardness. The levels of crosslinker in the epoxy-acrylic hybrid paint formulas will be depend on the required performance properties of the paints, such as the hardness and chemical resistance.

The following nonlimiting examples illustrate further aspects of the invention.

### EXAMPLE I

### Preparation of epoxy-acrylic emulsion using microfluidization.

An epoxy-acrylic hybrid emulsion having an epoxy content of 75% was prepared according to the following formula and procedure:

Ingredients (A) were charged to a two- liter round bottom flask followed by addition of (B) and (C) to form a pre-emulsion. This pre-emulsion was microfluidized in a M-110T Microfluidizer from Microfluidics Corporation at 80 psi (air) or 10,000 psi in the interaction chamber for two cycles. The microfluidized pre-emulsion was transferred to a 2 liter round bottom flask reactor equipped with a condenser then purged with nitrogen for 30 minutes and heated to 55°C. Ingredients (D) and (E) were slowly added over a two hour period. When the exotherm ended, the addition rate of (D) and (E) was increased and the remainder was added in one hour. No coagulum was visible during the polymerization.

| Ingredients | Weight (grams) |
|---|---|
| | |

| *(A)* | |
|---|---|
| Water | 5.0 |
| Sodium formaldehyde sulfoxylate | 0.2 |
| 1% ferrous sulfate in water | 0.4 |
| Sodium acetate | 0.1 |

| *(B)* | |
|---|---|
| Water | 330.0 |
| Abex EP-120 (30%) | 56.0 |
| Triton X405 (70%) | 8.0 |
| Sodium vinyl sulfonate (25%) | 8.0 |

| *(C)* | |
|---|---|
| Methyl methacrylate | 90.0 |
| Butyl acrylate | 10.0 |
| Epon 828 | 300.0 |
| Methacrylic acid | 4.0 |

| *(D)* | |
|---|---|
| Water | 25.0 |
| t-Butyl hydro peroxide | 1.0 |
| (70% active) | |

| *(E)* | |
|---|---|
| Water | 25.0 |
| Sodium formaldehyde sulfoxylate | 1.0 |

The resulting epoxy-acrylic hybrid emulsion polymer was determined to have 48% solids, pH of 4.2, a Brookfield viscosity of 39 cps, a particle size of 227 nm and minimum film forming temperature (MFFT) of <0°C.

### EXAMPLE II

### Preparation of epoxy-acrylic hybrid emulsion without microfluidization.

The procedure set forth in Example I was repeated to prepare an epoxy-acrylic hybrid emulsion having an epoxy content of 75% without microfluidization. The emulsion coagulated within an hour.

The results in Example II show that an epoxy-acrylic hybrid emulsion having an epoxy content of about 75% cannot be prepared using conventional processes.

### EXAMPLE III

### Preparation of epoxy-acrylic hybrid emulsion with microfluidization.

An epoxy-acrylic hybrid emulsion was prepared according to the following formula and the procedure set forth in Example I. No coagulum was visible during the polymerization.

| Ingredients | Weight (grams) |
|---|---|
| | |

| *(A)* | |
|---|---|
| Water | 5.0 |
| Sodium formaldehyde sulfoxylate | 0.2 |
| 1% ferrous sulfate in water | 0.4 |
| Sodium acetate | 0.1 |

| *(B)* | |
|---|---|
| Water | 330.0 |
| Abex EP-120 | 56.0 |
| Triton X405 | 8.0 |
| Sodium vinyl sulfonate (25%) | 8.0 |

| *(C)* | |
|---|---|
| Methyl methacrylate | 75.0 |
| Butyl acrylate | 25.0 |
| Epon 828 | 300.0 |
| Methacrylic acid | 4.0 |

| *(D)* | |
|---|---|
| Water | 25.0 |
| t-Butyl hydroperoxide (70% active) | 1.0 |

| *(E)* | |
|---|---|
| Water | 25.0 |
| Sodium formaldehyde sulfoxylate | 1.0 |

The resulting epoxy-acrylic hybrid emulsion polymer was determined to have 50.2% solids, pH of 3.7, a Brookfield viscosity of 49 cps, a particle size of 205 nm and minimum film forming temperature (MFFT) of 0°C.

### EXAMPLE IV

### Preparation of an epoxy-acrylic hybrid emulsion with microfluidization.

An epoxy-acrylic hybrid emulsion was prepared according to the following formula given below. Ingredients (A) were combined and microfluidized in a M-110T Microfluidizer from Microfluidics Corporation at 80 psi (air) or 10,000 psi in the interaction chamber for two cycles. The microfluidized pre-emulsion, 20% (174.4 g), was charged to a 2 L flask and purged with nitrogen for 30 minutes. At 60°C, 10 grams of (B) were added and the temperature was increased to 75°C. After initiation, (A) and (B) were slowly added over three hours. After 10 minutes, (C) was added in one shot. After 5 minutes (D) was added in one shot. The reaction was held for an additional 5 minutes before cooling and discharge. No coagulum was visible during the polymerization.

| Ingredients | Weight (grams) |
|---|---|
| | |

| *(A)* | |
|---|---|
| Water | 400.0 |
| POLYSTEP B-27 | 56.0 |
| Triton X-405 | 8.0 |
| Sodium vinyl sulfonate | 8.0 |
| Methyl Methacrylate | 200.0 |
| Butyl Acrylate | 132.0 |
| Epon 828 | 60.0 |
| Hydroxypropyl Acrylate | 4.0 |
| Methyl Acrylic Acid | 4.0 |

| *(B)* | |
|---|---|
| Water | 40.0 |
| Sodium Persulfate | 1.6 |

| *(C)* | |
|---|---|
| Water | 4.0 |
| t-Butyl hydro peroxide | 0.4 |

| *(D)* | |
|---|---|
| Water | 4.0 |
| Sodium formaldehyde sulfoxylate | 0.4 |

The resulting epoxy-acrylic hybrid emulsion polymer was determined to have 45.9% solids, pH of 2.3, a Brookfield viscosity of cps, a particle size of 163 nm and minimum film forming temperature (MFFT) of 0°C.

The results in Example IV show that the epoxy portion in the hybrid has to be cured for coating application. Otherwise the hybrids exhibit poor solvent resistance and hardness. Suitable curing agents can be amine or polyamine compounds. According to this invention, The epoxy-acrylic hybrid cured with isophoronediamine gives clear film with superior gloss and early film hardness development.

### EXAMPLE V

### Crosslinking and application of epoxy-acrylic hybrid emulsion.

The epoxy-acrylic hybrid emulsion prepared in Example I was mixed with a crosslinking agent which was an aqueous solution containing 26% isophoronediamine according to the following formula:

| Ingredients | Weight |
|---|---|
| Epoxy-Acrylic Hybrid (48%) | 500.0 g |
| Ammonium Hydroxide 7% | |
| Added slowly with stirring until pH around 8 | |
| 26% Isophoronediamne/water solution | 92.3 g |

The aqueous solution of isophoronediamine was added to the epoxy-acrylic hybrid immediately prior to application. The cured film was clear and gave the following properties:

| Tests | ASTM | Results |
|---|---|---|
| Film on gloss | | Clear & glossy |
| Gloss 20°/60° | D523 | 86.6/100.8 |
| Sward Rocker Hardness | D2134 | |
| *1day air dry* | | 12 |
| *7 day air dry* | | 44 |
| pot life | | >6 hrs. |

### EXAMPLE VI

### Crosslinking and application of epoxy-acrylic hybrid emulsion.

The epoxy-acrylic hybrid emulsion prepared in Example III was mixed with a crosslinking agent which was an aqueous solution containing 26% isophoronediamine according to the following formula:

| Ingredients | Weight |
|---|---|
| Epoxy-Acrylic Hybrid (48%) | 500.0 g |
| Ammonium Hydroxide 7% | |
| Added slowly with stirring until pH around 8 | |
| 26% Isophoronediamine/water solution | 92.3 g |

The aqueous solution of isophoronediamine was added to the epoxy-acrylic hybrid immediately prior to application to wood. The cured film was clear and exhibited good flexibility.

### EXAMPLE VII

### Crosslinking and application of epoxy-acrylic hybrid emulsion.

The epoxy-acrylic hybrid emulsion prepared in Example I was mixed with a crosslinking agent which was an aqueous solution containing 95% AMP 95 which is 2-amino-2-methyl-1-propanol according to the following formula:

| Ingredients | Weight |
|---|---|
| Epoxy-Acrylic Hybrid Emulsion (46%) | 500.0 g |
| Ammonia (7%) | |
| Added slowly with stirring until pH around 8 | |
| AMP 95 | 48.4g |

The aqueous solution of AMP 95 was added to the epoxy-acrylic hybrid emulsion immediately prior to addition into a paint formulation. The cured film was clear and gave the following properties:

| Tests | ASTM | Results |
|---|---|---|
| Film on glass at RT | | Clear & glossy |
| Sward Rocker Hardness | D2134 | |
| *1day air dry* | | 6 |
| Flexibility | D522 | |
| (1-9, 9=best) | | 8 |

The inventors believe that AMP 95 crosslinks the epoxy-acrylic hybrid emulsion binder in the paint formulation and thus provided the paint film with better chemical resistance and hardness.

### EXAMPLE VIII

The latex binders for coating application should have a MFFT of less than 5°C in order to provide a durable film and many other required film properties. Film hardness is an important requirement especially for clear wood coatings application. Acrylic emulsions which have higher Tg, thus exhibiting good film hardness, normally need large amount of coalescing solvents to obtain low MFFT. Coalescing solvents are considered V.O.C which people have been struggling trying to eliminate or minimize from coating systems. The epoxy-acrylic hybrids, according to this invention, are V.O.C free and have low MFFT even when the acrylic portions in the hybrid systems have high Tg values according to the following:

| | The Hybrid of Example I | The Hybrid of Example II | The Hybrid of Example III |
|---|---|---|---|
| Tg of the Acrylic Portion (°C) | 96 | 45 | 33 |
| MFFT (°C) | <0 | 0 | 0 |
| Epoxy, % wt in hybrid polymer | 75 | 75 | 15 |

The inventors have determined that the polyepoxide, especially low molecular weight polyepoxides, act as an internal coalescent for the acrylic portion in the epoxy-acrylic hybrid emulsion, thus much less or even no coalescing solvent is necessary for the film formation.

### EXAMPLE IX

### Physical blending of non-volatile coalescing aid with acrylic latex.

Physical blending of non-volatile coalescing aids with acrylic latexes is another option for lowering the MFFT and reducing V.O.C's. Two commercial epoxy resins EPON 828 and the emulsified version of EPON 828 (A/WD510) from Shell Chemical Corp. which are liquid non-volatile epoxy resins having a relatively low molecular weight. The acrylic emulsions had a

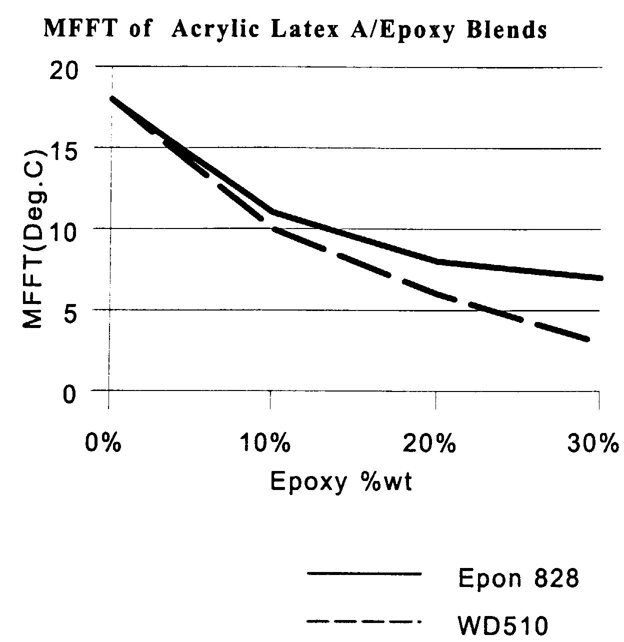

Tg of 22°C and were prepared from methylmethacrylate and butyl acrylate. The pH of the acrylic emulsions was adjusted with ammonia to a pH of about 8 prior to addition of the epoxy resin. Different physical blends of the acrylic emulsions and epoxy resins were prepared and their MFFTs were measured. The results are as shown in the following graph:

The results in the graph clearly show that as high as 30% epoxy was still not enough to reduce the MFFT of the acrylic emulsions to 0°C.

### EXAMPLE X

### Physical blending an acrylic emulsion and a epoxy resin.

A acrylic-epoxy physical blend was prepared according to the following formula and procedure:

| Ingredients | Weight (grams) |
|---|---|
| | |

| Part A | |
|---|---|
| Commercial Epoxy of relatively higher molecular weight | 440.0 |

| Part B | |
|---|---|
| Joncryl 89(acrylic emulsion) | 210.0 |
| Jonwax 26 | 26.5 |
| Water | 130.2 |
| Commercial polyamine | 73.3 |

Part A and Part B were mixed before application. The performance of the blend, as shown below, indicated that there was a compatibility problem and the epoxy resin was not a efficient coalescent in the blend. The MFFT of the acrylic latex was still not reduced to 0°C although the epoxy level was as high as 70%.

| Tests | ASTM | Results |
|---|---|---|
| Film at RT | | Hazy |
| Film at 50°C | | Hazy |
| MFFT(°C) | | 6 |
| Gloss (20°/60°) | D523 | 52.5/87.9 |
| Sward Rocker Hardness | D2134 | |
| (7 day air dry) | | 10 |

All the examples described above show that epoxy-acrylic hybrids give superior properties over their physical counterparts. Microfluidization technology allows a higher epoxy resin contents to be incorporated into the hybrid systems, thus broadening the area of the hybrid's application. The epoxy-acrylic hybrid emulsion can be formulated into two-component solvent-free wood coatings, direct-to-metal coatings and one component pigmented paint. The epoxy that is incorporated into the acrylic matrix acts as a coalescent during film-formation and lowers the minimum-film-forming-temperature (MFFT) of the binder to about 0°C without any other external coalescent. Films prepared using the epoxy-acrylic hybrid emulsions of the invention are durable and clear and exhibit superior gloss and better chemical resistance as compared to films prepared using physical blends of epoxy and acrylic resins.

While the invention has been described with particular reference to certain embodiments thereof, it will be understood that changes and modifications may be made by those of ordinary skill within the scope and spirit of the following claims.

## Claims

1. A process for preparing an epoxy-acrylic hybrid emulsion, said process comprising
(I) dissolving a polyepoxide with at least one acrylate monomer in the presence of water and from about 0.1 to 5 weight percent based on the total weight of monomers of at least one surfactant to form a mixture wherein the polyepoxide has a molecular weight of from about 300 to about 10,000 and the acrylate monomer has the formula 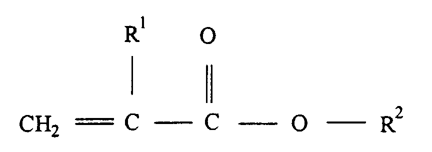 wherein R¹ is hydrogen or methyl and R² is selected from the group consisting of hydrogen, an alkyl group having from 1 to 10 carbon atoms, and a hydroxy alkyl group having from 1 to 4 carbon atoms;
(II) microfluidizing or homogenizing the mixture in a microfluidizer or homogenizer having a chamber pressure of from about 6,000 psi to about 15,000 psi to form a pre-emulsion wherein the original diameter of the polyepoxide and acrylic monomer droplets is from about 1 to about 10 microns is reduced to about 0.01 to about 0.5 microns, and
(III) polymerizing the pre-emulsion in the presence of a free radical polymerization catalyst and at a temperature of from about 30°C to about 100°C to form a stable epoxy-acrylic hybrid emulsion, wherein the polyepoxide is present in an amount of from about to about 20 to about 95 weight percent based on the total resin solids in the emulsion.

2. The process according to Claim 1 wherein the polyepoxide is dissolved in the acrylic monomers to provide a liquid mixture which is added incrementally to the water containing the surfactant and the free radical polymerization catalyst, and heated to polymerization temperature.

3. A process for preparing an epoxy-acrylic hybrid emulsion, said process comprising
(I) dissolving a polyepoxide with at least one acrylate monomer and a carboxylic monomer in the presence of water and from about 0.1 to 5 weight percent based on the total weight of monomers of at least one surfactant to form a mixture wherein the polyepoxide has a molecular weight of from about 300 to about 10,000, the acrylate monomer has the formula 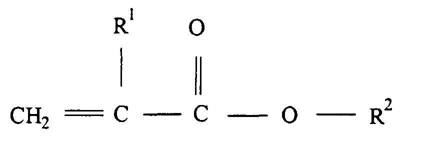 wherein R¹ is hydrogen or methyl and R² is selected from the group consisting of hydrogen, an alkyl group having from 1 to 10 carbon atoms, and a hydroxy alkyl group having from 1 to 4 carbon atoms, and the carboxylic monomer;
(II) microfluidizing or homogenizing the mixture in a microfluidizer or homogenizer having a chamber pressure of from about 6,000 psi to about 15,000 psi to form a pre-emulsion and
(III) polymerizing the pre-emulsion in the presence of a free radical polymerization catalyst and at a temperature of from about 30°C to about 100°C to form a stable epoxy-acrylic hybrid emulsion, wherein the polyepoxide is present in an amount of from about 30 to about 95 weight percent based on the total resin solids in the emulsion.

4. The process according to Claim 1 wherein the polyepoxide is selected from the group consisting of a diglycidyl ether of bisphenol A and a diglycidyl ether of bisphenol F.

5. The process according to Claim 1 wherein the molecular weight of the polyepoxide is from about 350 to about 4,000.

6. The process according to Claim 1 wherein the polyepoxide is present in an amount of from about 51 to about 90 weight percent based on the total resin solids in the emulsion.

7. The process according to Claim 1 wherein the microfluidizer or homogenizer has a chamber pressure of from about 8,000 psi to about 12,000 psi.

8. The process according to Claim 1 wherein the polyepoxide and acrylate monomer form droplets in the water wherein the average diameter of the droplets is from about 1 to about 10 microns prior to microfluidization or homogenation.

9. The process according to Claim 21 wherein the average diameter of the droplets is reduced to less than about 1 micron during microfluidization or homogenation.
